# DEMANDE DE BREVET EUROPEEN

(11) **EP 0 675 082 A1**
(43) Date de publication de la demande: **04.10.1995**
(21) Numéro de dépôt: 95400670.6
(22) Date de dépôt: 27.03.1995
(51) Int. Cl.: C02F 1/58, C04B 18/04

(54) **Nouveau procédé de traitement d'effluents contenant des fluorures libres**

(30) Priorité: 28.03.1994 FR 9403586
(71) Demandeur: SOCIETE D'EXPLOITATION DE PRODUITS POUR LES INDUSTRIES CHIMIQUES, S.E.P.P.I.C., F-75321 Paris Cédex 07 (FR)
(72) Inventeur: de Roulhac, Hugues Xavier, F-92100 Boulogne (FR); Barbarin, Michel Maurice, F-95880 Enghien (FR)
(74) Mandataire: Hubert, Philippe

(57) **Abrégé**

La présente invention a pour objet un procédé de traitement d'effluents contenant des fluorures libres, caractérisé en ce qu'il comprend: a) - l'incorporation desdits fluorures, sous forme de sels insolubles, dans une matrice silico-alumineuse: - soit par mélange d'un silico-alumineux aux boues résultant du traitement desdits effluents par un agent permettant la précipitation des ions fluorures sous forme de sels insolubles; - soit par mélange d'un silico-alumineux auxdits effluents et traitement dudit mélange ainsi obtenu par un agent permettant la précipitation des ions fluorures sous forme de sels insolubles; b) - la déshumidification de ladite matrice ainsi obtenue, de préférence jusqu'à l'obtention d'une humidité résiduelle de celle-ci comprise entre 20 et 45% en poids; c) - le formage du produit ainsi obtenu, par exemple dans une presse à boulets, de préférence dans des conditions permettant l'obtention d'une humidité résiduelle de celui-ci comprise entre 15 et 25% en poids; et d) - la cuisson du produit ainsi formé, à une température comprise entre 800°C et 1050°C, de préférence entre 850°C et 950°C. Cette incorporation peut être aussi réalisée en présence de dolomine en poids de l'ordre de 10 à 50% exprimé par rapport au poids de la matrice silico-alumineuse.

## Description

La présente invention a pour objet un nouveau procédé de traitement d'effluents contenant des fluorures libres.

On sait que des effluents liquides ou gazeux contenant des ions fluorure libres F⁻ sont générés dans de nombreux domaines industriels comme en particulier dans le domaine du traitement de surface (notamment du dépolissage du verre), du traitement de plaques de silicium, de la métallurgie (aluminium), de la production de spath fluor, d'engrais, ou encore du traitement des résidus d'émissions gazeuzes chargées en fluorure (terre cuite, argile, céramique industrielle, fumées d'incinération des ordures ménagères).

Ces effluents sont généralement traités pour en extraire les fluorures libres, et le procédé de traitement actuellement utilisé à cet effet consiste à soumettre lesdits effluents à un traitement physico-chimique à la chaux.

Plus précisément, les effluents contenant les ions fluorure libres, sont introduits dans un bassin et de la chaux est ajoutée en une quantité suffisante pour provoquer la précipitation des ions fluorure sous forme de fluorure de calcium ; la boue ainsi obtenue étant filtrée jusqu'à l'obtention d'une teneur en matière sèche de 35 à 70 % environ.

Ces boues fortement chargées en fluorure de calcium relarguent relativement faiblement les fluorures à la lixiviation (15 ppm environ) et entrent de ce fait dans la catégorie des déchets industriels spéciaux admissibles en décharge classe 1.

L'évolution récente de la réglementation qui s'applique au stockage des déchets industriels spéciaux rend souhaitable la mise au point d'un nouveau prodédé de traitement d'effluents contenant des fluorures libres qui permette l'obtention de déchets relargant plus faiblement encore les fluorures à la lixiviation.

La présente invention a pour but principal de parvenir à cet objectif.

C'est ainsi qu'il a tout d'abord été envisagé par les inventeurs de soumettre les boues chargées en fluorure de calcium à un traitement par oxycombustion à température élevée.

Cependant, les produits résultant de ce traitement sont très friables, en raison de la finesse des grains et de l'absence de cohésion entre ceux-ci.

Dans ces conditions, la présente invention a également pour but de résoudre le problème technique consistant en la fourniture d'un nouveau procédé de traitement d'effluents contenant des fluorures libres qui permette l'obtention d'un produit facile à manipuler, relargant très faiblement les fluorures à la lixiviation.

La présente invention a également pour but de résoudre le problème précité en fournissant un produit final qui puisse être facilement valorisé dans divers domaines industriels.

La présente invention a enfin pour but de résoudre le problème précité, de manière simple, fiable et utilisable à l'échelle industrielle.

La solution conforme à la présente invention, consiste ainsi en un procédé de traitement d'effluents contenant des fluorures libres, caractérisé en ce qu'il comprend :
a) - l'incorporation desdits fluorures, sous forme de sels insolubles, dans une matrice silico-alumineuse:
   - soit par mélange d'un silico-alumineux aux boues résultant du traitement desdits effluents par un agent permettant la précipitation des ions fluorures sous forme de sels insolubles;
   - soit par mélange d'un silico-alumineux auxdits effluents et traitement dudit mélange ainsi obtenu par un agent permettant la précipitation des ions fluorures sous forme de sels insolubles;
b) - la déshumidification de ladite matrice ainsi obtenue, de préférence jusqu'à l'obtention d'une humidité résiduelle de celle-ci comprise entre 20 et 45 % en poids;
c) - le formage du produit ainsi obtenu, par exemple dans une presse à boulets, de préférence dans des conditions permettant l'obtention d'une humidité résiduelle de celui-ci comprise entre 15 et 25 % en poids ; et
d) - la cuisson du produit ainsi formé, à une température comprise entre 800°C et 1050°C, de préférence entre 850°C et 950°C.

Il a été découvert, et ceci constitue le fondement de la présente invention, que le produit résultant de la mise en oeuvre du procédé qui vient d'être décrit relargue très faiblement les fluorures à la lixiviation, les tests de lixiviation réalisés faisant apparaître des quantités de fluorure nettement plus faibles que celles des boues inertées par le procédé conventionnel rappelé précédemment, et nettement inférieures à celle du Spath Fluor naturel.

En outre, le produit ainsi obtenu se présente sous une forme facile à manipuler, en raison du fait que les particules qui le constituent sont liées entre elles.

Ainsi, l'originalité du procédé conforme à la présente invention réside dans l'utilisation d'une matrice silico-alumineuse destinée à "piéger" le fluor, sous forme de sels insolubles, le silico-alumineux constituant ladite matrice intervenant:
- d'une part, pour donner une cohésion plastique à la boue comportant les ions fluorures sous forme de sels insolubles ; et
- d'autre part, pour permettre un frittage partiel ou total du produit calciné, à une température inférieure à la température à laquelle les ions fluorures ont tendance à se dégager dans l'air sous forme d'émissions gazeuses.

Ce frittage est réalisé dans des conditions permettant l'obtention d'une phase vitreuse plus ou moins importante.

Le produit ainsi obtenu peut être valorisé dans divers domaines industriels. En particulier, on peut envisager son utilisation comme produit de comblement (carrières, mines, revêtement routier, remblayage, etc) ou encore comme charge minérale pour des applications diverses comme par exemple la préparation d'enrobés bitumineux, de matière première pour four verrier (production d'opale, de verre pour bouteilles, de pâte de verre, de laine de verre, de fibres minérales), de terre cuite (tuiles, briques) ou de céramiques industrielles.

Le procédé conforme à la présente invention peut être utilisé pour traiter des effluents liquides ou gazeux, de préférence liquides, provenant notamment des domaines industriels rappelés en introduction.

Tout agent permettant la précipitation des ions fluorures sous forme de sels insolubles peut être utilisé dans le cadre de la présente invention. Un agent préféré est l'hydroxyde de calcium (chaux) mais d'autres agents peuvent être également utilisés comme par exemple le chlorure de calcium.

De préférence, on utilisera une quantité d'agent suffisante pour permettre la précipitation de tous les ions fluorures, et cette quantité pourra être facilement déterminée par l'homme de métier en fonction de la quantité de fluorures libres présents dans les effluents et du pH de ces effluents.

De nombreuses argiles peuvent être utilisées dans le cadre de la présente invention.

On choisira plus particulièrement les produits susceptibles de conférer une bonne plasticité et une bonne cohésion aux boues séchées obtenues à l'issue de l'étape b) précitée.

De préférence, on utilisera des argiles à comportement colloïdal.

Une argile particulièrement préférée est la bentonite du groupe des smectites, mais d'autres argiles peuvent être utilisés comme par exemple celles des groupes kaolinites, illites, chlorites, hormites et vermiculites.

La quantité d'argile à utiliser dans le cadre de la présente invention, pour former une matrice silico-alumineuse dépend, comme on le comprend, du type d'argile utilisé. Cette quantité doit être au moins suffisante pour piéger les ions fluorures.

D'une façon générale, il est nécessaire d'utiliser une quantité d'argile d'au moins 10% en poids, exprimé par rapport au poids de matière sèche.

La quantité maximale d'argile à utiliser est moins critique et dépend essentiellement de contraintes économiques.

D'une façon générale, cette quantité maximale pourra être de l'ordre de 40 % en poids, exprimé par rapport au poids de matière sèche.

La déshumidification de la matrice silico alumineuse (étape b) précitée) sera réalisée par pression, par centrifugation, par air chaud, par décantation. De préférence, cette déshumidification sera réalisée dans un filtre presse d'une installation traditionnelle.

Le formage (étape c) sera réalisé de préférence dans une presse à boulets ou bien encore dans une extrudeuse.

D'une façon générale, on peut utiliser pour cette étape, toute technique convenant pour la mise en forme des pâtes plastiques telle que extrusion - filage - étirage, compactage, pressage et éventuellement émiettage.

La cuisson doit être impérativement réalisée à une température comprise entre 800°C et 1050°C, de préférence entre 850°C et 1050°C.

On a en effet constaté qu'au-dessous d'une température d'environ 800°C, les réactions favorisant le frittage et la décomposition des sulfates et carbonates sont incomplètes, tandis qu'au-dessus de 1050°C, il est connu que la fluorine se décompose et génère des gaz fluorés, en quantité élevée.

Il est à noter que le frittage du produit calciné peut être amélioré par des adjuvants complémentaires tels que par exemple des silicates.

Il a été observé que bien que la fluorine soit généralement considérée comme thermiquement stable en dessous de 1 000°C, des dégagements notables de fluor gazeux se produisent lors de l'étape de cuisson précitée, lorsque celle-ci est réalisée, de façon connue, avec une montée régulière et contrôlée de la température (par exemple de l'ordre de 4°C par minute dans un four rotatif).

Il est possible de remédier à cet inconvénient, à l'échelle industrielle, en réalisant cette étape de cuisson avec une montée en température extrêmement rapide ("calcination flash").

Un tel procédé est cependant relativement coûteux.

Il a été découvert, et ceci constitue une caractéristique originale du procédé conforme à la présente invention, qu'il était également possible de diminuer de façon importante les dégagements de fluor gazeux au cours de la cuisson en rajoutant lors de l'étape d'incorporation des fluorures dans la matrice silico-alumineuse, une quantité appropriée de dolomie (CO₃)₂Mg, Ca.

Le mélange formé par la matrice silico-alumineuse et la dolomie permet en effet de "piéger" le fluor dans la matrice lors de la cuisson, sans modification des taux de fluor relargués par lixiviation.

D'une façon générale, la dolomie sera utilisée en une quantité en poids de l'ordre de 10 à 50 % de préférence de 20 à 40 % exprimé par rapport au poids de la matrice silico-alumineuse.

L'utilisation de dolomie, en association avec la matrice silico-alumineuse offre une alternative économique au procédé de "calcination flash" pour permettre la diminution des émissions gazeuses de fluor.

Bien entendu, on peut envisager également d'utiliser de la dolomie lors de la cuisson par "calcination flash".

Selon un deuxième aspect, la présente demande vise à couvrir les produits nouveaux susceptibles d'être obtenus par la mise en oeuvre du procédé décrit précédemment.

Selon un troisième et dernier aspect, la présente demande vise à couvrir l'utilisation de ces produits comme produits de comblement, comme charges minérales pour des applications diverses comme par exemple la préparation d'enrobés bitumineux, de matière première pour four verrier, de terre cuite ou de céramique industrielle.

D'autres buts, caractéristiques et avantages de l'invention apparaîtront plus clairement à la lecture de la description explicative qui va suivre faite en référence à divers exemples de réalisation de l'invention donnés uniquement à titre illustratif et qui ne sauraient donc en aucune façon limiter la portée de l'invention.

Dans ces exemples, tous les pourcentages sont donnés en poids, sauf indication contraire.

### EXEMPLE 1

Les effluents contenant des fluorures libres traités dans cet exemple sont des effluents aqueux provenant d'un atelier de dépolissage du verre et comportant notamment des fluorures, des chlorures, des ammoniums et du sulfate de barium. Ces effluents sont essentiellement constitués des eaux de rinçage obtenues après trempage de flacons et/ou de bouteilles en verre dans un bain acide de traitement constitué d'un mélange d'acide chlorhydrique technique et du produit commercialisé sous la dénomination Lérite®.

Ces effluents sont traités de façon conventionnelle par une quantité de chaux suffisante pour permettre la précipitation de tous les fluorures libres sous forme de sels insolubles de fluorure de calcium (CaF₂).

La boue ainsi obtenue est séparée en deux parties.

Une première partie destinée à conduire à un produit de comparaison est soumise à un séchage dans un filtre presse jusqu'à l'obtention d'une teneur en matière sèche d'environ 40 % en poids.

Le produit de comparaison ainsi obtenu se présente sous la forme d'une poudre fine comportant en majorité du fluorure de calcium.

La deuxième partie de la boue est mélangée en voie humide dans un malaxeur à bras en Z avec 20% d'une argile du groupe des smectites, type bentonite, de composition suivante :
- SiO₂: 58.68 %
- Al₂O₃: 15.87 %
- Fe₂O₃: 3.72 %
- MgO: 2.52 %
- K₂O: 1.85 %
- CaO: 1.54 %
- Na₂O: 1.24 %
- TiO₂: 0.75 %
- P₂O₅: 0.09 %
- Mn₂O₃: 0.07 %
- Perte au feu: 13.07 %

Après homogénéisation, on obtient une pâte formant une matrice silico-alumineuse incorporant les fluorures sous forme de sels insolubles.

Cette pâte est séchée jusqu'à l'obtention d'une humidité résiduelle d'environ 43 % en poids, puis le produit ainsi obtenu est formé dans une extrudeuse à piston vertical sous forme de "nouilles" de 6 mm de diamètre.

Le produit ainsi formé est séché jusqu'à l'obtention d'une humidité résiduelle inférieure à 10%, puis fragmenté sous forme de granulats.

Ces granulats sont cuits à une température de 980°C.

Les granulats cuits ainsi obtenus présentent une couleur beige et une structure poreuse mais dense par grésage, très résistante mécaniquement et présentant un aspect de produit céramique.

### EXEMPLE 2

Essai de lixiviation.

### a) - Protocole expérimental

Le mode opératoire utilisé est celui décrit dans la norme AFNOR X31-210.

### b) - Résultats obtenus

Les résultats obtenus font apparaître des quantités de fluorure extraites environ deux fois plus faibles que celles extraites du produit de comparaison constitué d'une boue ayant subi un traitement conventionnel à la chaux, suivi d'un séchage dans un filtre presse.

Pour respecter la norme en vigueur actuellement, on a broyé le produit obtenu par la mise en oeuvre du procédé selon l'invention.

L'utilisation du produit directement obtenu par la mise en oeuvre du procédé selon l'invention conduit à des résultats encore améliorés d'un facteur deux.

Des résultats semblables ont été obtenus en utilisant une argile du groupe des kaolinites, type BS1 et BS6 de la Société AGS, à la place de la bentonite utilisée dans l'exemple 1.

Une telle argile de type kaolinite présente la composition suivante :
- SiO₂: 50 %
- Al₂O₃: 2.35 %
- Fe₂O₃: 1,5 %
- K₂O: 0,5 %
- Autres oxydes: 1 %
- Perte au feu: 12 %

### EXEMPLE 3

Influence de la présence de dolomie lors de l'incorporation dans la matrice silo-alumineuse :

Une boue obtenue dans des conditions expérimentales analogues à celles décrites l'exemple 1 a été mélangée :
- d'une part, avec une argile de type kaolinite utilisée seule, dans des proportions respectives en poids de 75/25;
- d'autre part, avec un mélange de même argile et de dolomie dans des proportions respectives en poids 75/16,66/8,33.

Des granulats ont été préparés en utilisant le protocole expérimental décrit à l'exemple I, l'étape de cuisson étant réalisée dans un four rotatif avec une élévation progressive de la température de 4°C par minute à partir de la température de 400°C.

Au cours du cycle de cuisson on a mesuré le dégagement de fluor toutes les 200 secondes.

On a ainsi constaté en fin de cuisson que la composition contenant la dolomie conduit à un dégagement de fluor inférieur d'environ 40 % à celui mesuré avec la composition sans dolomie.

Par ailleurs les taux de fluor relargués lors des essais de lixiviation sont comparables pour les deux types de granulats.

## Revendications

1. Procédé de traitement d'effluents contenant des fluorures libres, caractérisé en ce qu'il comprend :
a) - l'incorporation desdits fluorures, sous forme de sels insolubles, dans une matrice silico-alumineuse :
- soit par mélange d'un silico-alumineux aux boues résultant du traitement desdits effluents par un agent permettant la précipitation des ions fluorures sous forme de sels insolubles ;
- soit par mélange d'un silico-alumineux auxdits effluents et traitement dudit mélange ainsi obtenu par un agent permettant la précipitation des ions fluorures sous forme de sels insolubles ;
b) - la déshumidification de ladite matrice ainsi obtenue, de préférence jusqu'à l'obtention d'une humidité résiduelle de celle-ci comprise entre 20 et 45 % en poids ;
c) - le formage du produit ainsi obtenu, par exemple dans une presse à boulets, de préférence dans des conditions permettant l'obtention d'une humidité résiduelle de celui-ci comprise entre 15 et 25 % en poids ; et
d) - la cuisson du produit ainsi formé, à une température comprise entre 800°C et 1050°C, de préférence entre 850°C et 950°C.

2. Procédé selon la revendication 1, caractérisé en ce que le silico-alumineux précité présente une structure colloïdale et consiste en une argile.

3. Procédé selon la revendication 1 ou 2, caractérisé en ce que l'agent permettant la précipitation des ions fluorures sous forme de sels insolubles est l'hydroxyde de calcium.

4. Procédé selon la revendication 2 ou 3, caractérisé en ce que l'argile précitée est choisie dans le groupe comprenant les smectites, les kaolinites, les illites, les chlorites, les hormites, les vermiculites et l'attapulgite.

5. Procédé selon la revendication 4, caractérisé en ce que l'argile précitée est la bentonite.

6. Procédé selon l'une des revendications 2 à 5, caractérisé en ce que la quantité d'argile utilisée pour former la matrice silico-alumineuse est d'au moins 10% en poids, exprimé par rapport au poids de la matière sèche.

7. Procédé selon l'une quelconque des revendications 1 à 6, caractérisé en ce que la déshumidification précitée est réalisée par pression, par centrifugation, par air chaud ou par décantation.

8. Procédé selon l'une quelconque des revendications 1 à 7, caractérisé en ce que le formage (étape c) précité est réalisé par une technique choisie parmi l'extrusion - filage - étirage, compactage, pressage et éventuellement émiéttage.

9. Procédé selon l'une quelconque des revendications 1 à 8, caractérisé en ce que l'incorporation précitée des fluorures dans la matrice silico-alumineuse est réalisée en présence de dolomine, utilisée de préférence en une quantité en poids de l'ordre de 10 à 50 % exprimé par rapport au poids de la matrice silico-alumineuse.

10. Produits incorporant des ions fluorures susceptibles d'être obtenus par la mise en oeuvre du procédé selon l'une quelconque des revendications 1 à 9.

11. Utilisation des produits selon la revendication 10 comme produits de comblement, comme charges minérales pour des applications diverses comme par exemple la préparation d'enrobés bitumineux, de matière première pour four verrier, de terre cuite ou de céramique industrielle.
